# EUROPÄISCHE PATENTSCHRIFT

(11) **EP 3 414 468 B1**
(45) Veröffentlichungstag und Bekanntmachung des Hinweises auf die Patenterteilung: **16.06.2021**
(21) Anmeldenummer: 17704231.4
(22) Anmeldetag: 08.02.2017
(51) Int. Cl.: F16F 1/44

(54) **FEDERUNGSEINRICHTUNG UND BEFESTIGUNGSEINRICHTUNG ZUR BEFESTIGUNG EINES MASCHINENELEMENTS SOWIE VERWENDUNG**
RESILIENT UNIT AND MOUNTING UNIT FOR THE MOUNTING OF A MACHINE PART AS WELL AS USE
DISPOSITIF DE SUSPENSION ET DE FIXATION POUR FIXATION D'UN ELEMENT DE MACHINE AINSI QU'UTILISATION

(30) Priorität: 09.02.2016 DE 102016102204
(43) Veröffentlichungstag der Anmeldung: 19.12.2018
(73) Patentinhaber: thyssenkrupp AG, 45143 Essen (DE); Uhde High Pressure Technologies GmbH, 58093 Hagen (DE)
(72) Erfinder: NÜNNERICH, Peter, Dr., 57080 Siegen (DE); KNAUF, Wilfried, 58313 Herdecke (DE)
(74) Vertreter: thyssenkrupp Intellectual Property GmbH
(86) Internationale Anmeldenummer: PCT/EP2017/052725
(87) Internationale Veröffentlichungsnummer: WO 2017/137425

(56) Entgegenhaltungen:
- EP-A1- 0 587 987
- DE-A1- 2 923 290
- DE-A1-102004 059 049
- DE-U- 1 992 297
- US-A- 2 263 599
- US-A- 2 668 049

## Beschreibung

### Stand der Technik

Die vorliegende Erfindung betrifft eine Federungseinrichtung mit einem Kolben und mit einem Gehäuse, in welches der Kolben entlang einer Bewegungsrichtung einführbar ist, wobei zwischen dem Kolben und dem Gehäuse ein Hohlraum gebildet ist. Ferner betrifft die Erfindung eine Befestigungseinrichtung zur Befestigung eines Maschinenelements sowie die Verwendung der Federungseinrichtung im Zusammenhang mit der Befestigung von Maschinenelementen.

Derartige Federungseinrichtungen werden beispielsweise zur schwingungsgedämpften Lagerung von Maschinen verwendet.

Aus der DE 1 958 660 U ist eine Federungseinrichtung mit einem hohlzylindrisch ausgebildeten Gehäuse und einem in dem Gehäuse beweglich angeordneten Kolben bekannt. Zwischen dem Kolben und dem Gehäuse besteht ein zylindrischer Hohlraum, welcher mit einem dämpfenden Medium aus einem Schaumstoff ausgefüllt ist. Der Schaumstoff weist Bläschen auf, die mit einem Gas gefüllt sind. Bei einer den Hohlraum verkleinernden Bewegung des Kolbens werden die gasgefüllten Bläschen zusammengedrückt und dabei die Bewegung des Kolbens elastisch abgefedert und gedämpft.

Bei derartigen Federungseinrichtungen werden Volumenänderungen des Hohlraums durch die Kompression des in den Bläschen enthaltenen Gases ermöglicht. Es besteht der Nachteil, dass der maximal aufnehmbare Druck der Federungseinrichtung durch den Kompressionsmodul des verwendeten Gases begrenzt ist, welcher bei Atmosphärendruck typischerweise unterhalb von 1 MPa liegt. Derartige Schaumstoffe können daher nicht zur Federung und/oder Dämpfung besonders hoher Drücke in Federungseinrichtungen verwendet werden, die aus hohen Kräften bei kompaktem Bauraum auftreten würden. Aus der US 2 668 049 A wird eine Federeinrichtung mit einem Kolben und eine dem Federkörperelement zugewandten konkaven Oberfläche offenbart. US 2 668 049 A offenbart die Präambel der Ansprüche 1 und 16.

Weitere Federungseinrichtungen werden auch in den folgenden Veröffentlichungen beschrieben: US 2 263 599 A, DE 17 59 755 A, DE 16 75 012, DE 2 342 370 C2, US 3 434 708 A,

DE 74 39 698 U, US 3 039 757 A, US 3 376 031 A, DE 19 92 297 U.

### Offenbarung der Erfindung

Aufgabe der vorliegenden Erfindung ist es, die elastische Abfederung hoher Kräfte bei kompakter Bauform zu ermöglichen.

Zur Lösung der Aufgabe wird eine Federungseinrichtung mit einem Kolben und mit einem Gehäuse vorgeschlagen, in welches der Kolben entlang einer Bewegungsrichtung einführbar ist, wobei zwischen dem Kolben und dem Gehäuse ein Hohlraum gebildet ist, wobei in dem Hohlraum ein kompressibles Festkörperfederelement angeordnet ist, welches aus einem durch den Kolben komprimierbaren festen Material besteht.

Dabei ist wenigstens eine dem Festkörperfederelement zugewandte Oberfläche des Kolbens konisch oder konkav ausgeformt. Dies ermöglicht bei Kompression daran angreifende Kraftkomponenten nach innen auszurichten, insbesondere zumindest annähernd zu einem Mittelpunkt des Festkörperfederelements. Dabei kann wenigstens eine dem Festkörperfederelement zugewandte Oberfläche des Kolbens derart konisch oder konkav ausgeformt sein, dass eine bei Kompression daran angreifende Kraftkomponente auch ein Aufspreizen des Kolbens bewirkt. Dies liefert eine besonders vorteilhafte Druckverteilung sowohl im Festkörperfederelement als auch am Kolben bzw. an der Schnittstelle zum Gehäuse.

Bei der erfindungsgemäßen Federungseinrichtung erfolgt bei Verkleinerung des Hohlraums durch den in das Gehäuse eindringenden Kolben eine Kompression des festen Materials des Festkörperfederelements. Das feste, kompressible Material weist einen im Vergleich zu Gasen höheren Kompressionsmodul auf, so dass bei gleicher Verkleinerung des Hohlraums eine größere Kraft aufgenommen werden kann. Zudem kommt es bei einem Festkörperfederelement nur zu geringen Temperaturerhöhungen im Vergleich zu Gasen. Auch ist die Federkompression bei Gasen deutlich stärker ausgeprägt. Mit der erfindungsgemäßen Federungseinrichtung ist es daher möglich, hohe Kräfte abzufedern, ohne dass es erforderlich ist, den Bauraum der Federungseinrichtung, insbesondere den Hohlraum zwischen Gehäuse und Kolben, zu vergrößern.

Bevorzugt ist das Festkörperfederelement als Vollmaterial-Festkörperfederelement ausgebildet. Das bedeutet, dass das Festkörperfederelement keine Ausnehmungen, Einschlüsse oder Poren aufweist. Das Festkörperfederelement ist bevorzugt ungeschäumt bzw. ohne fluidgefüllte Kavitäten ausgebildet.

Das Festkörperfederelement kann mehrteilig aus mehreren Segmenten ausgebildet sein, insbesondere auch in nicht fluchtender Anordnung zueinander, z.B. in einer Anordnung mit einer eine Stirnfläche des einen Segmentes lateral auf eine Mantelfläche des anderen Segmentes wirkend. Die Abfederung kann dabei in mehreren Dimensionen erfolgen, mit mehreren Wirkrichtungen oder auch mehreren Angriffspunkten oder Kraftvektoren entlang unterschiedlich ausgerichteter Achsen. Die einzelnen Segmente können jeweils ein spezifisches Kompressionsmodul aufweisen.

Eine bevorzugte Ausgestaltung sieht vor, dass das Festkörperfederelement den Hohlraum zwischen Kolben und Gehäuse im Wesentlichen vollständig, bevorzugt vollständig, ausfüllt. Insbesondere auch für die Montage kann es hilfreich sein, wenn ein minimaler Spalt vorhanden ist. Ein vollständiges Ausfüllen kann daher auch als ein zumindest unter Betriebsbelastung vollständiges Ausfüllen verstanden werden. Das vollständige Ausfüllen bedingt dann eine Anlage der jeweiligen Flächen aneinander. Ein Ausdehnen oder ein Verlagern des Festkörperfederelements innerhalb des Hohlraums ist dann nicht möglich, so dass für die Federungseigenschaften vorwiegend, bevorzugt ausschließlich, die Kompressibilität des Materials des Festkörperfederelements ausschlaggebend ist. Die Kompression erfolgt dann bei minimalen Volumenänderungen. Ein möglicherweise dennoch vorhandenes Freivolumen (im nicht belasteten Zustand) ist deutlich kleiner als ein Hub bzw. Hubvolumen des Kolbens.

Das Gehäuse der Federungseinrichtung kann einteilig oder mehrteilig ausgebildet sein. Bevorzugt sind das Gehäuse und der Kolben nicht gasdicht gegeneinander abgedichtet, so dass ein konstruktiv einfacher Aufbau ermöglicht wird.

Gemäß einer bevorzugten Ausgestaltung ist das Festkörperfederelement aus einem Kunststoff ausgebildet. Besonders bevorzugt handelt es sich bei dem Kunststoff um einen Thermoplasten. Alternativ kann der Kunststoff ein Elastomer sein.

Als vorteilhaft hat es sich herausgestellt, wenn das Festkörperfederelement einen Kompressionsmodul im Bereich von 100 MPa bis 100.000 MPa, bevorzugt von 1000 MPa bis 6000 MPa aufweist. Bevorzugt sind der Elastizitätsmodul des Gehäuses und/oder des Kolbens wenigstens dreimal größer, vorzugsweise 10- bis 100-mal größer als der Kompressionsmodul des Festkörperfederelements. Beispielsweise können das Gehäuse und/oder der Kolben aus Metall ausgebildet sein, insbesondere aus Stahl, Aluminium oder Buntmetall.

Besonders bevorzugt ist eine Ausgestaltung, bei welcher das Festkörperfederelement aus Polyethylen ausgebildet ist. Damit kann die Federungseinrichtung kostengünstig realisiert werden. Besonders bevorzugt ist das Festkörperfederelement aus ultra-hochmolekularem Polyethylen (PE-UHMW) ausgebildet. Alternativ kann das Festkörperfederelement aus Polyamid ausgebildet sein.

Eine vorteilhafte Ausgestaltung sieht vor, dass das Festkörperfederelement aus mindestens zwei geschichteten Segmenten mit jeweils unterschiedlichen Kompressionsmodulen zusammengesetzt ist. Dadurch kann die Steifigkeit und das Progressionsverhalten der Federungseinrichtung besonders genau abgestimmt werden. Beispielsweise können die Segmente in der Bewegungsrichtung des Kolbens hintereinander angeordnet sein.

Gemäß einem Ausführungsbeispiel ist das Festkörperfederelement aus mindestens zwei Segmenten gebildet, welche in unterschiedlichen Wirkrichtungen jeweils in einer von mehreren Kavitäten des Gehäuses einander kontaktierend angeordnet sind, insbesondere eine Stirnseite des eine Segmentes an einer lateralen Mantelfläche eines/des anderen Segmentes. Dies liefert hohe Flexibilität, sei es bezüglich abzufedernder Kraftrichtungen, sei es hinsichtlich einer Faktorisierung von Kräften (Volumenübersetzer).

Wie erwähnt, ist es vorteilhaft, wenn wenigstens eine dem Festkörperfederelement zugewandte Oberfläche des Kolbens konisch oder konkav ausgeformt ist. Bei einer den Hohlraum verkleinernden Bewegung bewirkt dann der im Festkörperfederelement herrschende quasi statische Druck eine Kraftkomponente, welche zum Aufspreizen des Kolbens führt und damit einen Spalt zwischen Kolben und Gehäuse verkleinert bzw. zum Anliegen des Kolbens an die Gehäuseinnenfläche führt. Die Gefahr einer Extrusion von Material des Festkörperfederelements wird verringert, was auch die Lebensdauer der Federungseinrichtung erhöht. Dieser Effekt kann auch als eine mit steigender Belastung sich selbst verbessernde Abdichtung des Hohlraumes beschrieben werden.

Die eingangs genannte Aufgabe wird ferner gelöst durch eine Befestigungseinrichtung zur Befestigung eines Maschinenelements mit einer vorstehend beschriebenen Federungseinrichtung. Damit lassen sich auf elegante Weise mehrere Funktionen zusammen mit einem sehr kompakten Bauteil erfüllen. Insbesondere ergeben sich damit zuvor beschriebene Vorteile.

Eine vorteilhafte Ausgestaltung sieht vor, dass der Kolben und/oder das Festkörperfederelement einen kreisförmigen Querschnitt aufweist. Dies liefert eine besonders kompakte, robuste, einfache Bauform, die gut in kleine Kavitäten integrierbar ist.

Alternativ ist eine Ausgestaltung bevorzugt, bei welcher der Kolben und/oder das Festkörperfederelement einen ringförmigen Querschnitt aufweist. Dies hat den Vorteil, dass in einem Loch der Ringform eine Verbindungseinrichtung angeordnet werden kann, beispielsweise eine Schraube oder ein Niet. In diesem Zusammenhang hat es sich als besonders vorteilhaft erwiesen, wenn der Kolben und/oder das Festkörperfederelement konzentrisch um ein zylindrisches Durchgangsloch angeordnet sind, in welchem eine Schraube aufnehmbar ist. Die Befestigungseinrichtung weist bevorzugt eine in dem Durchgangsloch aufgenommene Schraube auf. Insofern kann die Federungseinrichtung als Vorspannelement für eine Schraubverbindung Anwendung finden.

Gemäß einem Ausführungsbeispiel liegt der Kolben innen am Gehäuse an oder ist daran zur Anlage gebracht, insbesondere vollumfänglich. Dies liefert hohe Robustheit und exakt definierbare Dämpfungseigenschaften.

Gemäß einem Ausführungsbeispiel bildet der Kolben zusammen mit dem Gehäuse eine Innenbegrenzung oder Innenmantelfläche des Hohlraums, welcher Hohlraum zumindest durch den Kolben komprimierbar ist. Dies liefert eine kompakte, stabile Anordnung für hohe Druckbelastungen.

Bei der erfindungsgemäßen Federeinrichtung sind alle dem Festkörperfederelement zugewandten Oberflächen des Kolbens konisch oder konkav ausgebildet, korrespondierend zu einer entsprechenden konvexen Form des am Kolben anliegenden Festkörperfederelements. Dies ermöglicht eine vorteilhafte Einbettung des Festkörperfederelements, insbesondere hinsichtlich Druckverteilung.

Gemäß einem Ausführungsbeispiel sind zwischen dem Gehäuse und dem Kolben gebildete Ecken größer 90°, insbesondere größer 125°. Auch dies begünstigt die Einbettung.

Gemäß einem Ausführungsbeispiel ist der Hohlraum von konkaven oder ebenen Flächenabschnitten umgrenzt, die stetig oder mit einem Winkel größer 90°, insbesondere größer 125° ineinander übergehen. Dies liefert gutes Kompressionsverhalten auch bei hohen Drücken/Kräften, ohne das Festkörperfederelement stark zu beanspruchen.

Gemäß einem Ausführungsbeispiel ist der Kolben beidseitig an zwei Stirnseiten des Gehäuses angeordnet. Dies hat auch Vorteile hinsichtlich Symmetrie und Aktuierung bzw. Krafteinwirkung auf das Festkörperfederelement

Gemäß einem Ausführungsbeispiel weist der Kolben ein- oder beidseitig eine Anlage- oder Druckfläche zur Aufnahme und Übertragung der auf das Festkörperfederelement zu übertragenden (Kompressions-)Kräfte auf. Dies liefert eine einfache, robuste Anordnung bzw. Aufbau, auch bei kleinen Dimensionen, auch bezüglich größer Kräfte. Auch kann eine Symmetrie auf einfache Weise realisiert werden. Insbesondere ist eine Reihenschaltung bzw. Reihenanordnung von Maschinenelement, Gehäuse, Festkörperfederelement und Kolben, oder von Maschinenelement, Kolben, Festkörperfederelement und nochmals Kolben realisierbar.

Gemäß einem Ausführungsbeispiel überlappt der Kolben das Gehäuse im unbelasteten Zustand zumindest an einer Seite und steht daraus hervor, insbesondere bezüglich einer Stirnseite des Gehäuses. Dabei kann der Kolben an einer Deckplatte anliegen. Die Größe der Überlappung kann einem Abstand zwischen der Deckplatte und dem Gehäuse entsprechen.

Gemäß einem Ausführungsbeispiel weist das Festkörperfederelement wenigstens ein konisch-konvexes Ende auf, und/oder wobei das Festkörperfederelement zylindrisch und an gegenüberliegenden Seiten doppelt konisch-konvex ausgebildet ist. Dies liefert nicht zuletzt auch Vorteile hinsichtlich Druckverteilung. Der Hohlraum kann eine entsprechende Geometrie aufweisen. Die Federungseinrichtung kann eingerichtet sein, das Hohlraumvolumen im Bereich eines/des zylindrischen Abschnitts des Hohlraums bzw. Festkörperfederelements zu variieren. Dies liefert eine homogene Lastverteilung, weitgehend unabhängig vom Kompressionsgrad.

Gemäß einem Ausführungsbeispiel weist das Gehäuse eine Schulter oder Stufe auf, insbesondere in Ausgestaltung als Stufenbohrung, an welcher Schulter oder Stufe das Festkörperfederelement anliegt oder zur Anlage bringbar ist. Dies ermöglicht, den Querschnitt des Hohlraumes im Verhältnis zum Kolben-Querschnitt zu vergrößern für eine Verringerung der Steifigkeit der Anordnung, in der Art eines Volumen-Übersetzers. Wahlweise kann der Querschnitt des Hohlraumes im Verhältnis zum Kolben-Querschnitt auch verkleinert werden für eine Erhöhung der Steifigkeit. Das Festkörperfederelement kann demnach so ausgestaltet werden, dass unterschiedliche Volumenformen miteinander kombiniert werden können, sodass Anpassungen bezüglich Bauraum und Feder-Steifigkeit auf einfache Weise möglich sind, neben anderen Möglichkeiten, wie z.B. einem Wechsel des Polymer-Materials.

Gemäß einem Ausführungsbeispiel ist die Federungseinrichtung eingerichtet für eine Volumenübersetzung, insbesondere mittels einer im Gehäuse vorgesehenen Schulter oder Stufe und/oder oder mittels mehrerer nicht fluchtend angeordneter, aufeinanderwirkender Segmente des Festkörperfederelementes. Eine Volumenübersetzung kann also nicht nur durch eine Stufe oder Schulter im Gehäuse erfolgen, sondern auch durch eine Anordnung des Festkörperfederelementes (bzw. mehrerer Segmente des Festkörperfederelementes) in mehreren miteinander verbundenen, aber unabhängig voneinander beaufschlagbaren Kavitäten, beispielsweise zwei zylindrischen Kavitäten in orthogonaler Anordnung zueinander. Auch eine Kombination beider Maßnahmen ist möglich, je nach Anwendungsfall und Verlauf der Kraftvektoren bzw. je nach Anordnung der abzudämpfenden Gegenstände. Eines der Segmente bzw. eine der Kavitäten kann dabei z.B. deutlich kleiner dimensioniert sein als das andere Segment bzw. die andere Kavität, und kann in der Art eines kleinen Stößels auf das größere Segment wirken (Volumenübersetzung bzw. Faktorisierung eines Abfederungseffektes).

Bei der Befestigungseinrichtung können alternativ oder zusätzlich zu den vorstehend beschrieben Ausgestaltungen die im Zusammenhang mit der Federungseinrichtung genannten vorteilhaften Merkmale verwendet werden.

Die zuvor genannte Aufgabe wird auch gelöst durch eine Federungseinrichtung zur Lagerung eines Maschinenelements, insbesondere durch eine zuvor beschriebene Federungseinrichtung, hergestellt durch Einführen eines Kolbens in ein Gehäuse und Bilden eines Hohlraums dazwischen, in welchem ein kompressibles Festkörperfederelement angeordnet wird, wobei wenigstens eine dem Festkörperfederelement zugewandte konische oder konkave Oberfläche des Kolbens derart im Hohlraum gelagert wird, dass bei Kompression daran angreifende Kraftkomponenten nach innen ausgerichtet werden, und/oder derart, dass eine bei Kompression daran angreifende Kraftkomponente ein Aufspreizen des Kolbens bewirkt.

Die zuvor genannte Aufgabe wird auch gelöst durch Verwendung einer zuvor beschriebenen Federungseinrichtung als Vorspannelement für eine Befestigungseinrichtung in der Art einer Schraubverbindung, oder Verwendung einer zuvor beschriebenen Federungseinrichtung an einem oder an der Stelle eines oder anstelle eines Behälter-Verschlussstopfens, insbesondere als Ersatz eines massiven Verschlussstopfens. Es hat sich gezeigt, dass sich das hier beschriebene Festkörperfederelement insbesondere auf Grund der kompakten Bauform insbesondere zur Ausgestaltung von Baugruppen in Bauräumen eignet, die anderenfalls durch Deformation extremen Zwangskräften unterworfen wären. Das Festkörperfederelement vermag auf sehr vor-teilhafte Weise Belastungen zu kompensieren, insbesondere derart, dass sogar eine Entlastung erzielt werden kann, z.B. bei einem Dichtungssystem mit vergleichsweise empfindlicher Dichtungslinse mit für die Abdichtung spezifisch ausgelegter Oberflächenkontur. Insbesondre kann sichergestellt werden, dass die Flächenpressung an der Dichtungslinse über den gesamten (Betriebs-)Druckbereich konstant bleibt. Dazu kann das Festkörperfederelement oder die gesamte Anordnung spezifisch hinsichtlich optimaler Steifigkeit abgestimmt werden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken. Bezüglich Bezugszeichen, die nicht explizit in einer der Figuren beschrieben werden, wird auf die weiteren Figuren verwiesen.

### Kurze Beschreibung der Figuren

**Figur 1** zeigt ein erstes Ausführungsbeispiel einer Befestigungseinrichtung mit einer Federungseinrichtung gemäß der Erfindung in einer Schnittdarstellung.
**Figur 2, 3** zeigen die Befestigungseinrichtung gemäß Figur 1 in einer Seitenansicht in Richtung der Bewegungsrichtung des Kolbens sowie in einer perspektivischen Darstellung.
**Figur 4** zeigt ein zweites Ausführungsbeispiel einer Befestigungseinrichtung mit einer Federungseinrichtung gemäß der Erfindung in einer Schnittdarstellung.
**Figur 5** zeigt die Befestigungseinrichtung gemäß Figur 4 in einer perspektivischen Darstellung.
**Figur 6** zeigt ein drittes Ausführungsbeispiel in einer Schnittansicht.
**Figur 7** zeigt ein drittes Ausführungsbeispiel in einer Schnittansicht.

Die **Figuren 8A, 8B, 8C** zeigen in mehreren Ansichten auch im Detail eine spezifische Anwendung gemäß Ausführungsbeispielen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

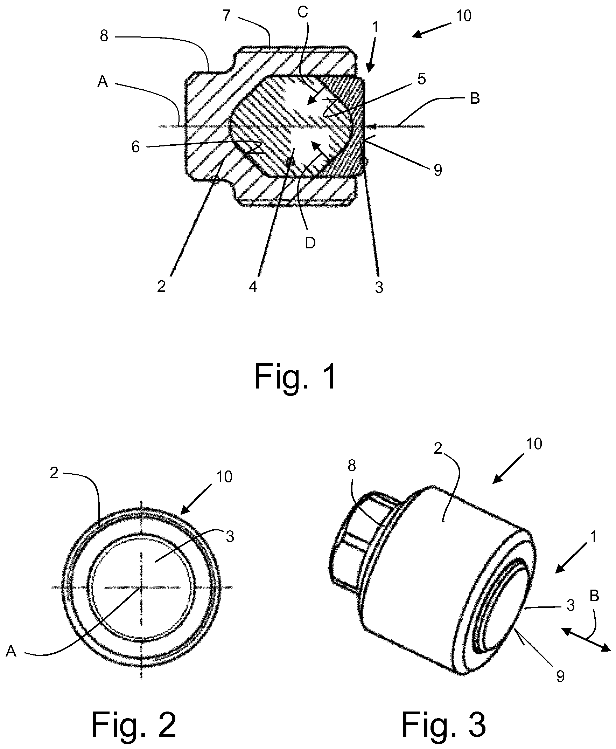

In den **Figuren 1 bis 3** ist ein erstes Ausführungsbeispiel einer erfindungsgemäßen Befestigungseinrichtung 10 zur Befestigung eines Maschinenelements mit einer Federungseinrichtung 1 dargestellt. Die Befestigungseinrichtung 10 ist als federgedämpfter Haltebolzen ausgebildet, über welchen eine Lagerung eines beweglichen, insbesondere oszillierenden Maschinenteils erfolgen kann.

Die Befestigungseinrichtung 10 weist eine im Wesentlichen zylindrische Gestalt auf und ist mit einem Außengewinde 7 versehen, über welches die Befestigungseinrichtung 10 an einem ersten Maschinenteil befestigt werden kann. An einer ersten Stirnseite der Befestigungseinrichtung 10 ist ein beispielsweise als Sechskant ausgebildeter Mehrkant 8 vorgesehen, an welchem ein Werkzeug angesetzt werden kann. An der gegenüberliegenden Stirnseite weist die Befestigungseinrichtung 10 eine Druckfläche 9 auf, an welcher ein zweites Maschinenteil gelagert werden kann. Alternativ kann das zweite Maschinenteil mit dem Kolben 3 verbunden sein, insbesondere stoffschlüssig. Gehäuse 2 und Kolben 3 können bezüglich ihrer Anbindung auch anders ausgeformt werden, insbesondere auch integraler Bestandteil der gegeneinander abzufedernden Maschinenteile sein.

Die Federungseinrichtung 1 weist ein Gehäuse 2 auf, welches bei dem ersten Ausführungsbeispiel einstückig ausgestaltet ist und einen Grundkörper der Befestigungseinrichtung 10 darstellt. Innerhalb des Gehäuses 2 ist ein zylindrischer Kolben 3 in einer Bewegungsrichtung B beweglich gelagert, welche parallel zu einer Längsachse A der Federungseinrichtung 1 verläuft. Insofern weist der Kolben 3 einen kreisförmigen Querschnitt auf. Sowohl Gehäuse 2 als auch Kolben 3 sind aus Metall, insbesondere Stahl gefertigt. Im Bereich zwischen dem Kolben 3 und der Innenkontur des Gehäuses 2 befindet sich ein Hohlraum, welcher vollständig mit einem Festkörperfederelement 4 ausgefüllt ist. Das Festkörperfederelement 4 ist kompressibel, so dass über das Festkörperfederelement 4 eine Kompressionsfeder bereitgestellt wird.

Das Festkörperfederelement 4 ist aus polymerem Thermoplast ausgebildet. Bevorzugt wird dafür Polyethylen verwendet. Das Festkörperfederelement 4 ist zylindrisch mit kreisförmigem Querschnitt ausgestaltet. Das Festkörperfederelement 4 ist als einstückiges Vollmaterial-Festkörperfederelement 4 ausgestaltet, welches keine Einschlüsse, Ausnehmungen oder Poren aufweist. In einer Abwandlung kann das Festkörperfederelement 4 derart segmentiert sein, dass es mehrere Segmente mit unterschiedlichen Kompressionsmodulen aufweist, wodurch eine Federungseinrichtung 1 mit einer progressiven Federkennlinie bereitgestellt werden kann.

Um ungewolltes Abtragen bzw. ungewollte Extrusion von Material des Festkörperfederelementes 4 bei wiederholtem Ein- und Ausfedern des Kolbens 3 zu verringern oder zu verhindern, ist es vorteilhaft, wenn eine dem Festkörperfederelement 4 zugewandte Oberfläche 5 des Kolbens 3 konisch oder konkav ausgeformt ist. Bei einer den Hohlraum verkleinernden Bewegung bewirkt der im Festkörperfederelement 4 herrschende quasi statische Druck eine Kraftkomponente C und D, die zum Aufspreizen des Kolbens führt und damit einen Spalt zwischen Kolben 3 und Gehäuse 2 verkleinert bzw. zum Anliegen des Kolbens 3 an die Gehäuseinnenfläche führt.

Die der vorstehend beschriebenen Oberfläche 5 des Kolbens 3 gegenüberliegende innenseitige Oberfläche 6 des Gehäuses kann aus Symmetriegründen und den damit verbundenen Vorteilen hinsichtlich Montage ebenfalls entsprechend der Fläche 5 ausgeformt sein.

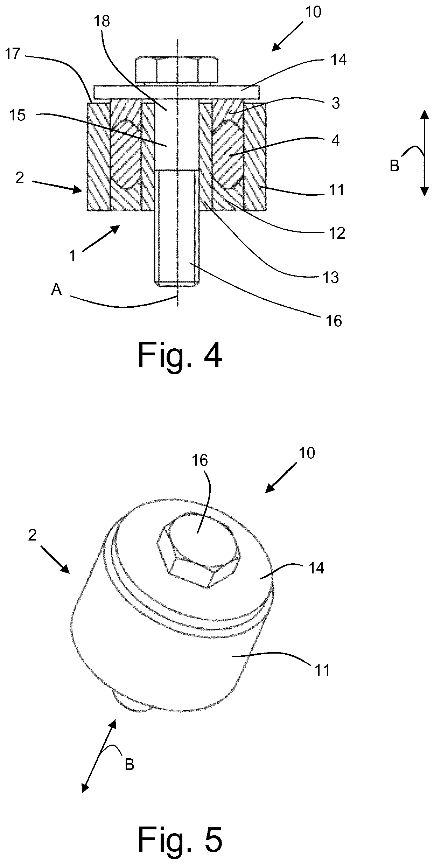

In den **Figuren 4 und 5** ist ein zweites Ausführungsbeispiel einer Befestigungseinrichtung 10 gezeigt, mittels welcher eine schwingungsgedämpfte Befestigung von Maschinenteilen erfolgen kann. Die Befestigungseinrichtung 10 weist eine Federungseinrichtung 1 mit einem Gehäuse 2 auf, welches ringförmig aufgebaut ist. Das Gehäuse 2 weist eine zylindrische Außenwand 11 und eine zylindrische Innenwand 13 auf, welche über einen ringförmigen Boden 12 miteinander verbunden sind. Außenwand 11 und Innenwand 13 sind konzentrisch um eine Längsachse A angeordnet. Insofern handelt es sich bei dem Gehäuse 2 um ein mehrstückiges Gehäuse 2. Im Bereich der Längsachse A weist das Gehäuse 2 ein Durchgangsloch 15 auf, in welches eine Schraube 16 eingeführt werden kann.

Ferner weist die Federungseinrichtung 1 einen ringförmigen Kolben 3 auf, der zusammen mit dem Gehäuse 2 einen ringförmigen Hohlraum begrenzt und in einer zur Längsachse A parallelen Bewegungsrichtung B bewegbar in dem Gehäuse 2 gelagert ist. Kolben 3 und Gehäuse 2 sind aus Metall, beispielsweise Stahl gefertigt. Der ringförmige Hohlraum wird vollständig durch ein kompressibles, ringförmiges Festkörperfederelement 4 ausgefüllt. Das Festkörperfederelement 4 ist aus Polymer, bevorzugt aus Polyethylen gebildet.

Um ungewolltes Abtragen bzw. ungewollte Extrusion von Material von dem Festkörperfederelement 4 bei wiederholtem Ein- und Ausfedern des Kolbens 3 zu verringern, ist es vorteilhaft, wenn eine dem Festkörperfederelement 4 zugewandte Oberfläche 5 des Kolbens 3 und/oder des Bodens 12 konisch oder konkav ausgeformt sind. Bei einer den Hohlraum verkleinernden Bewegung bewirkt der im Festkörperfederelement 4 herrschende quasi statische Druck eine Kraftkomponente, die zum Aufspreizen des Kolbens 3 führt und damit den Spalt zwischen Kolben 3 und dem Gehäuse 2 verkleinert bzw. zum Anliegen der Kolbens 3 und 12 an die Gehäuseinnenfläche führt.

An der dem Festkörperfederelement 4 gegenüberliegenden Seite des ringförmigen Kolbens 3 ist eine Deckplatte 14 befestigt. Die Deckplatte 14 weist eine Ausnehmung zur Durchführung der Schraube 16 auf, welche fluchtend mit dem Durchgangsloch 15 des Gehäuses 2 angeordnet ist. Ein zweites Maschinenteil kann mit dem Gehäuse 2 verbunden werden. Hierzu kann an der Außenseite des Gehäuses 2, insbesondere an der Außenseite der Außenwand 11 ein Außengewinde vorgesehen sein.

Die Deckplatte 14 ist derart angeordnet, dass sie in einem unbelasteten Zustand der Federungseinrichtung 1 einen Abstand von dem Gehäuse 2 aufweist. Bei einer starken Belastung der Federungseinrichtung 1 schlägt die Deckplatte 14 an einer Stirnseite 17 des Gehäuses 2 an, wodurch eine übermäßige Belastung des Festkörperfederelements 4 verhindert werden kann.

Die vorstehend beschriebenen Befestigungseinrichtungen 10 zur Befestigung von Maschinenelementen weisen jeweils eine Federungseinrichtung 1 mit einem Kolben 3 und mit einem Gehäuse 2 auf, in welches der Kolben 3 entlang einer Bewegungsrichtung B einführbar ist. Zwischen dem Kolben 3 und dem Gehäuse 2 ist jeweils ein Hohlraum gebildet, in welchem ein kompressibles Festkörperfederelement 4 angeordnet ist, welches aus einem durch den Kolben 3 komprimierbaren Festkörper besteht.

Gemäß einer Abwandlung des in den Figuren 4 und 5 dargestellten Ausführungsbeispiels ist der Kolben 3 mit der Außenwand 11 verbunden, und der Boden 12 ist mit der Innenwand 13 verbunden, so dass das Gehäuse von Boden12 und Innenwand 13 gebildet wird.

Eine weitere Abwandlung sieht vor, dass der Kolben 3 mit der Innenwand 13 verbunden ist und der Boden 12 mit der Außenwand 11 verbunden ist. Insofern weist das Gehäuse den Boden 12 und die Außenwand 11 auf.

Gemäß einer weiteren Abwandlung ist das mit dem Bezugszeichen 12 bezeichnete Element bezüglich der Innenwand 13 und der Außenwand 11 bewegbar, so dass dieses einen Kolben im Sinne der Erfindung bildet. In einer derartigen Ausgestaltung übernimmt das mit dem Bezugszeichen 3 bezeichnete Element die Funktion des Bodens. Das Gehäuse wird somit durch die Elemente 11, 12 und 3 gebildet.

Anwendungsfälle für die vorliegende Erfindung werden zurzeit mit Tellerfedern, Wellfedern und anderen Ausprägungen von metallischen Biegefedern abgedeckt. Die hier vorliegende Erfindung benötigt dem gegenüber bei vergleichbaren Kraft- und Verformungsdaten einen geringeren Bauraum.

Im Gegensatz zu fluidgefüllten Federelementen benötigt die erfindungsgemäße Federungseinrichtung keine weiteren Dichtungselemente.

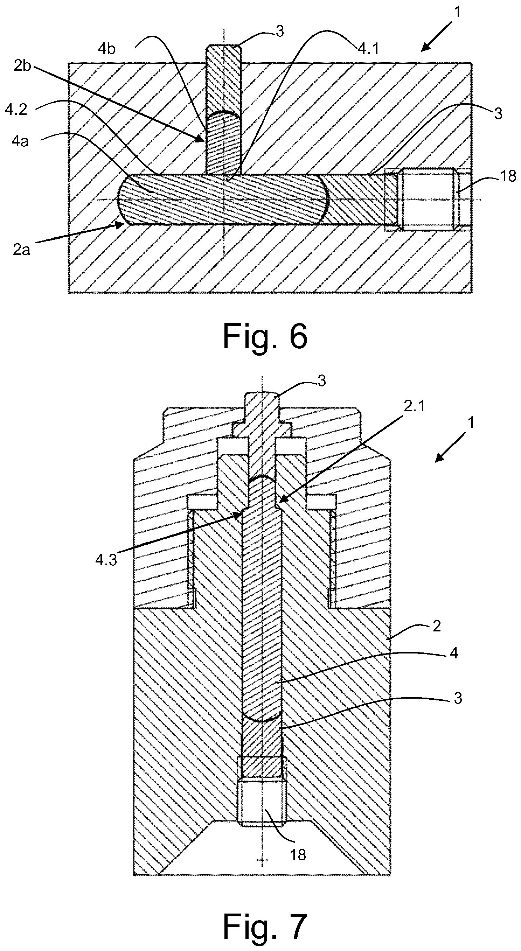

**Figur 6** zeigt eine Federungseinrichtung 1 mit einem Gehäuse mit zwei Kavitäten 2a, 2b, in welchen jeweils ein Segment 4a, 4b eines zweiteiligen Festkörperfederelementes 4 angeordnet ist. Eine Stirnseite 4.1 des einen Segmentes 4a wirkt dabei auf eine laterale Mantelfläche 4.2 des anderen Segmentes 4b. Auf jedes der Segmente wirkt ein Kolben 3, sei es aktiv (direkt), sei es passiv (indirekt). Hierdurch kann eine Funktion als Volumenübersetzer realisiert werden. Das Festkörperfederelement 4 ist mehrteilig ausgeführt, wobei die einzelnen Segmente 4a, 4b nicht fluchtend angeordnet sind, sondern zumindest annähernd orthogonal zueinander. Mittels eines Verschlussstopfens 18 kann die Lage des einen Kolbens und damit der Federweg justiert werden bzw. im eingebauten Zustand die Vorspannkraft eingestellt werden.

**Figur 7** zeigt eine Federungseinrichtung 1 mit einem Gehäuse mit einer Stufe oder Schulter 2.1. Das Festkörperfederelement 4 weist eine geometrisch dazu korrespondierende Stufe oder Schulter 4.3 auf, sei es durch die Anordnung in Kompression im Gehäuse, sei es als vorgegebene Geometrie. Hierdurch kann eine Funktion als Volumenübersetzer realisiert werden.

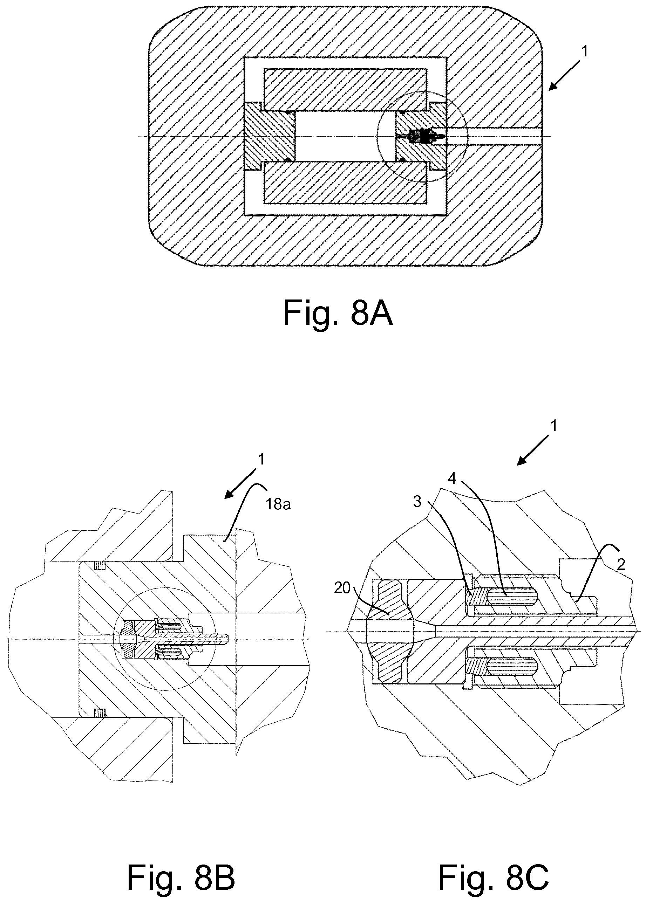

Die **Figuren 8A, 8B, 8C** zeigen in mehreren Ansichten auch im Detail eine spezifische Anwendung einer Federungseinrichtung 1 in einer Hochdruck-Behälteranordnung im Zusammenhang mit einer Dichtlinse 20. Das Gehäuse 2 ist an das abzudichtende Maschinenelement angeschraubt. Bei dieser Art Integration können extreme Kräfte, die bei unterschiedlicher Stauchung des Behälter-Verschlussstopfens 18a auftreten können, in beherrschbare Kräfte hinsichtlich der Dicht- und Anschlusselemente 20 umgesetzt werden. Die Figur 8B zeigt im Detail den umkreisten Bereich der Figur 8A, und die Figur 8C zeigt im Detail den umkreisten Bereich der Figur 8B.

### Bezugszeichenliste

- 1: Federungseinrichtung
- 2: Gehäuse
- 2a: erste Kavität des Gehäuses
- 2b: zweite Kavität des Gehäuses
- 2.1: Schulter oder Stufe
- 3: Kolben
- 4: Festkörperfederelement
- 4a: erstes Segment des Festkörperfederelementes
- 4b: zweites Segment des Festkörperfederelementes
- 4.1: Stirnseite des Festkörperfederelementes
- 4.2: laterale Mantelfläche des Festkörperfederelementes
- 4.3: Schulter oder Stufe
- 5: Oberfläche des Kolbens
- 6: Oberfläche des Gehäuses
- 7: Außengewinde
- 8: Mehrkant
- 9: Druckfläche
- 10: Befestigungseinrichtung
- 11: Außenwand
- 12: Boden
- 13: Innenwand
- 14: Deckplatte
- 15: Durchgangsloch
- 16: Schraube
- 17: Stirnseite des Gehäuses
- 18, 18a: Verschlussstopfen bzw. Behälter-Verschlussstopfen
- 20: Dichtlinse
- A: Längsachse
- B: Bewegungsrichtung des Kolbens
- C: Kraftkomponente
- D: Kraftkomponente

## Patentansprüche

1. Federungseinrichtung mit einem Kolben (3) und mit einem Gehäuse (2), in welches der Kolben (3) entlang einer Bewegungsrichtung (B) einführbar ist, wobei zwischen dem Kolben (3) und dem Gehäuse (2) ein Hohlraum gebildet ist,
wobei in dem Hohlraum ein kompressibles Festkörperfederelement (4) angeordnet ist, welches aus einem durch den Kolben (3) komprimierbaren Festkörper besteht, **dadurch gekennzeichnet, dass** alle dem Festkörperfederelement zugewandten Oberflächen des Kolbens korrespondierend zu einer entsprechenden konvexen Form des Festkörperfederelements (4) derart konisch oder konkav ausgeformt sind, dass eine den Hohlraum verkleinernden Bewegung des Kolbens zu einem Aufspreizen des Kolbens führt, wobei der Kolben aus Metall ausgebildet ist.

2. Federungseinrichtung nach Anspruch 1, wobei das Festkörperfederelement (4) den Hohlraum zwischen dem Kolben (3) und dem Gehäuse (2) im Wesentlichen vollständig oder zumindest unter Betriebsbelastung vollständig ausfüllt.

3. Federungseinrichtung nach einem der vorhergehenden Ansprüche, wobei das Festkörperfederelement (4) aus Kunststoff ausgebildet ist, insbesondere aus Thermoplast oder aus Elastomer; oder wobei das Festkörperfederelement (4) aus Polyethylen ausgebildet ist.

4. Federungseinrichtung nach einem der vorhergehenden Ansprüche, wobei das Festkörperfederelement (4) einen Kompressionsmodul im Bereich von 100 MPa bis 100.000 MPa aufweist, insbesondere von 1000 MPa bis 6000 MPa.

5. Federungseinrichtung nach einem der vorhergehenden Ansprüche, wobei das Festkörperfederelement (4) aus mindestens zwei geschichteten Segmenten mit jeweils unterschiedlichen Kompressionsmodulen zusammengesetzt ist; oder wobei das Festkörperfederelement (4) aus mindestens zwei Segmenten (4a, 4b) gebildet ist, welche in unterschiedlichen Wirkrichtungen jeweils in einer von mehreren Kavitäten (2a, 2b) des Gehäuses einander kontaktierend angeordnet sind, insbesondere eine Stirnseite (4.1) an einer lateralen Mantelfläche (4.2).

6. Federungseinrichtung nach einem der vorhergehenden Ansprüche, wobei der Kolben (3) und/oder das Festkörperfederelement (4) einen kreisförmigen Querschnitt aufweisen.

7. Federungseinrichtung nach einem der vorhergehenden Ansprüche, wobei der Kolben (3) und/oder das Festkörperfederelement (4) einen ringförmigen Querschnitt aufweisen.

8. Federungseinrichtung nach Anspruch 7, wobei der Kolben (3) und/oder das Festkörperfederelement (4) konzentrisch um ein zylindrisches Durchgangsloch (15) angeordnet sind, in welchem eine Schraube (16) aufnehmbar ist.

9. Federungseinrichtung nach einem der vorhergehenden Ansprüche, wobei der Kolben (3) innen am Gehäuse (2) anliegt oder zur Anlage gebracht ist, insbesondere vollumfänglich; und/oder wobei der Kolben (3) zusammen mit dem Gehäuse (2) eine Innenbegrenzung oder Innenmantelfläche des Hohlraums bildet, welcher Hohlraum zumindest durch den Kolben komprimierbar ist.

10. Federungseinrichtung nach einem der vorhergehenden Ansprüche, wobei zwischen dem Gehäuse und dem Kolben gebildete Ecken größer 90° sind, insbesondere größer 125°; und/oder wobei der Hohlraum von konkaven oder ebenen Flächenabschnitten umgrenzt ist, die stetig oder mit einem Winkel größer 90°, insbesondere größer 125° ineinander übergehen.

11. Federungseinrichtung nach einem der vorhergehenden Ansprüche, wobei der Kolben beidseitig an zwei Stirnseiten des Gehäuses angeordnet ist; und/oder wobei der Kolben ein- oder beidseitig eine Anlage- oder Druckfläche zur Aufnahme und Übertragung der auf das Festkörperfederelement zu übertragenden Kräfte aufweist.

12. Federungseinrichtung nach einem der vorhergehenden Ansprüche, wobei der Kolben das Gehäuse im unbelasteten Zustand zumindest an einer Seite überlappt und daraus hervorsteht, insbesondere bezüglich einer Stirnseite des Gehäuses.

13. Federungseinrichtung nach einem der vorhergehenden Ansprüche, wobei das Festkörperfederelement wenigstens ein konisch-konvexes Ende aufweist; und/oder wobei das Festkörperfederelement zylindrisch und an gegenüberliegenden Seiten doppelt konisch-konvex ausgebildet ist.

14. Federungseinrichtung nach einem der vorhergehenden Ansprüche, wobei das Gehäuse eine Schulter oder Stufe (2.1) aufweist, insbesondere in Ausgestaltung als Stufenbohrung, an welcher Schulter oder Stufe das Festkörperfederelement anliegt oder zur Anlage bringbar ist.

15. Federungseinrichtung nach einem der vorhergehenden Ansprüche, wobei die Federungseinrichtung (1) eingerichtet ist für eine Volumenübersetzung, insbesondere mittels einer/der im Gehäuse (2) vorgesehenen Schulter oder Stufe (2.1) und/oder oder mittels mehrerer nicht fluchtend angeordneter, aufeinanderwirkender Segmente (4a, 4b) des Festkörperfederelementes.

16. Federungseinrichtung zur Lagerung eines Maschinenelements, hergestellt durch Einführen eines aus Metall ausgebildeten Kolbens (3) in ein Gehäuse (2) und Bilden eines Hohlraums dazwischen, in welchem ein kompressibles Festkörperfederelement (4) angeordnet wird, wobei alle dem Festkörperfederelement (4) zugewandten konischen oder konkaven Oberflächen des Kolbens derart im Hohlraum gelagert werden, dass bei Kompression daran angreifende Kraftkomponenten derart nach innen ausgerichtet werden, dass eine bei Kompression an der jeweiligen Oberfläche angreifende Kraftkomponente ein Aufspreizen des Kolbens bewirkt.

17. Federungseinrichtung nach einem der vorhergehenden Ansprüche, wobei der Elastizitätsmodul des Gehäuses und/oder des Kolbens wenigstens dreimal größer als der Kompressionsmodul des Festkörperfederelements ist; und/oder wobei das Gehäuse und/oder der Kolben aus Metall ausgebildet sind, insbesondere aus Stahl, Aluminium oder Buntmetall.

18. Federungseinrichtung nach einem der vorhergehenden Ansprüche, wobei das Festkörperfederelement an der zugewandten Oberfläche des Kolbens anliegt und den Kolben kontaktiert.

19. Befestigungseinrichtung (10) zur Befestigung eines Maschinenelements,
**gekennzeichnet durch** eine Federungseinrichtung (1) nach einem der vorhergehenden Ansprüche.

20. Verwendung einer Federungseinrichtung nach einem der vorhergehenden Ansprüche als Vorspannelement für eine Befestigungseinrichtung in der Art einer Schraubverbindung, insbesondere in einer Hochdruck-Behälteranordnung mit einer Dichtungslinse (20), oder Verwendung einer Federungseinrichtung nach einem der vorhergehenden Ansprüche an einem oder an der Stelle eines oder anstelle eines Behälter-Verschlussstopfens, insbesondere als Ersatz eines massiven Verschlussstopfens in einer Hochdruck-Behälteranordnung mit einer Dichtungslinse (20).

21. Verwendung einer Federungseinrichtung nach einem der vorhergehenden Ansprüche in einem Dichtungssystem mit Dichtungslinse (20).

## Claims

1. Spring device with a piston (3) and with a housing (2) into which the piston (3) can be introduced in a movement direction (B), wherein a cavity is formed between the piston (3) and the housing (2), wherein a compressible solid body spring element (4) is arranged in the cavity and consists of a solid body that can be compressed by the piston (3), **characterized in that** all surfaces of the piston facing the solid body spring element are formed conically or concavely, corresponding to a corresponding convex form of the solid body spring element (4), such that a movement of the piston reducing the cavity leads to a spreading of the piston, wherein the piston is made of metal.

2. Spring device according to Claim 1, wherein the solid body spring element (4) fills the cavity between the piston (3) and the housing (2) substantially completely, or completely at least under operating load.

3. Spring device according to any of the preceding claims, wherein the solid body spring element (4) is made of plastic, in particular thermoplastic or elastomer; or wherein the solid body spring element (4) is made of polyethylene.

4. Spring device according to any of the preceding claims, wherein the solid body spring element (4) has a bulk modulus in the range from 100 MPa to 100,000 MPa, in particular from 1000 MPa to 6000 MPa.

5. Spring device according to any of the preceding claims, wherein the solid body spring element (4) is assembled from at least two coated segments each with different bulk moduli; or wherein the solid body spring element (4) is formed from at least two segments (4a, 4b) which are arranged contacting each other in different action directions each in one of several cavities (2a, 2b) of the housing, in particular an end face (4.1) on a lateral casing surface (4.2).

6. Spring device according to any of the preceding claims, wherein the piston (3) and/or the solid body spring element (4) have/has a circular cross section.

7. Spring device according to any of the preceding claims, wherein the piston (3) and/or the solid body spring element (4) have/has an annular cross section.

8. Spring device according to Claim 7, wherein the piston (3) and/or the solid body spring element (4) are/is arranged concentrically about a cylindrical passage hole (15) in which a screw (16) can be received.

9. Spring device according to any of the preceding claims, wherein the piston (3) lies or is brought to rest on the inside on the housing (2), in particular over the full circumference; and/or wherein the piston (3) together with the housing (2) forms an inner delimitation or inner casing surface of the cavity, which cavity is at least compressible by the piston.

10. Spring device according to any of the preceding claims, wherein corners formed between the housing and the piston are greater than 90°, in particular greater than 125°; and/or wherein the cavity is surrounded by concave or flat surface portions which transform into each other constantly or with an angle which is greater than 90°, in particular greater than 125°.

11. Spring device according to any of the preceding claims, wherein on both sides, the piston is arranged on two end faces of the housing; and/or wherein on one or both sides, the piston has a contact or pressure face for receiving and transmitting the forces to be transmitted to the solid body spring element.

12. Spring device according to any of the preceding claims, wherein the piston in unloaded state overlaps the housing on at least one side and protrudes therefrom, in particular in relation to an end face of the housing.

13. Spring device according to any of the preceding claims, wherein the solid body spring element has at least one conically convex end; and/or wherein the solid body spring element is formed cylindrically and doubly conically convex on opposite sides.

14. Spring device according to any of the preceding claims, wherein the housing has a shoulder or step (2.1), in particular in a configuration as a stepped bore, against which shoulder or step the solid body spring element lies or may be brought to rest.

15. Spring device according to any of the preceding claims, wherein the spring device (1) is configured for a volume translation, in particular by means of a/the shoulder or step (2.1) provided in the housing (2) and/or by means of several segments (4a, 4b) of the solid body spring element which are arranged unaligned with but acting on each other.

16. Spring device for mounting a machine element, produced by introduction of a piston (3) made of metal into a housing (2) and formation of a cavity in between, in which a compressible solid body spring element (4) is arranged, wherein all conical or concave surfaces of the piston facing the solid body spring element (4) are mounted in the cavity such that, on compression, force components acting thereon are oriented inwardly such that a force component acting on the respective surface under compression causes a spreading of the piston.

17. Spring device according to any of the preceding claims, wherein the modulus of elasticity of the housing and/or the piston is at least three times greater than the bulk modulus of the solid body spring element; and/or wherein the housing and/or the piston are formed of metal, in particular steel, aluminium or non-ferrous metal.

18. Spring device according to any of the preceding claims, wherein the solid body spring element lies against the facing surface of the piston and contacts the piston.

19. Securing device (10) for securing a machine element, **characterized by** a spring device (1) according to any of the preceding claims.

20. Use of a spring device according to any of the preceding claims as a pretensioning element for a securing device in the manner of a screw connection, in particular in a high-pressure container arrangement with a sealing disc (20), or use of a spring device according to any of the preceding claims on or at the site of or instead of a container stopper, in particular as a replacement for a solid stopper in a high-pressure container arrangement with a sealing disc (20).

21. Use of a spring device according to any of the preceding claims in a sealing system with a sealing disc (20).

## Revendications

1. Dispositif de suspension comportant un piston (3) et comportant un boîtier (2) dans lequel le piston (3) peut être introduit le long d'une direction de déplacement (B), un espace creux étant formé entre le piston (3) et le boîtier (2),
un élément élastique à corps solide compressible (4) étant disposé dans l'espace creux, lequel élément est constitué d'un corps solide pouvant être comprimé par le piston (3), **caractérisé en ce que** toutes les surfaces du piston tournées vers l'élément élastique à corps solide sont formées de manière conique ou concave de manière à correspondre à une forme convexe correspondante de l'élément élastique à corps solide (4), de telle sorte qu'un déplacement du piston réduisant l'espace creux mène à un écartement du piston, le piston étant réalisé à partir de métal.

2. Dispositif de suspension selon la revendication 1, l'élément élastique à corps solide (4) remplissant l'espace creux entre le piston (3) et le boîtier (2) sensiblement complètement ou complètement au moins sous une sollicitation de fonctionnement.

3. Dispositif de suspension selon l'une des revendications précédentes, l'élément élastique à corps solide (4) étant réalisé à partir de matière synthétique, en particulier à partir de matière thermoplastique ou à partir d'élastomère ; ou l'élément élastique à corps solide (4) étant réalisé à partir de polyéthylène.

4. Dispositif de suspension selon l'une des revendications précédentes, l'élément élastique à corps solide (4) présentant un module de compressibilité dans la plage de 100 MPa à 100 000 MPa, en particulier de 1000 MPa à 6000 MPa.

5. Dispositif de suspension selon l'une des revendications précédentes, l'élément élastique à corps solide (4) étant composé d'au moins deux segments stratifiés présentant respectivement différents modules de compressibilité ; ou l'élément élastique à corps solide (4) étant formé à partir d'au moins deux segments (4a, 4b), lesquels sont disposés de manière à être en contact les uns avec les autres dans différentes directions d'action respectivement dans l'une parmi plusieurs cavités (2a, 2b) du boîtier, en particulier un côté frontal (4.1) sur une surface d'enveloppe latérale (4.2) .

6. Dispositif de suspension selon l'une des revendications précédentes, le piston (3) et/ou l'élément élastique à corps solide (4) présentant une section transversale circulaire.

7. Dispositif de suspension selon l'une des revendications précédentes, le piston (3) et/ou l'élément élastique à corps solide (4) présentant une section transversale annulaire.

8. Dispositif de suspension selon la revendication 7, le piston (3) et/ou l'élément élastique à corps solide (4) étant disposés concentriquement autour d'un trou traversant cylindrique (15) dans lequel une vis (16) peut être reçue.

9. Dispositif de suspension selon l'une des revendications précédentes, le piston (3) s'appuyant sur l'intérieur du boîtier (2) ou y étant amené en appui, en particulier sur toute la périphérie ; et/ou le piston (3) formant conjointement avec le boîtier (2) une délimitation intérieure ou une surface d'enveloppe intérieure de l'espace creux, lequel espace creux peut être comprimé au moins par le piston.

10. Dispositif de suspension selon l'une des revendications précédentes, des coins formés entre le boîtier et le piston étant supérieurs à 90°, en particulier supérieurs à 125° ; et/ou l'espace creux étant entouré par des parties de surface concaves ou planes qui se prolongent les unes dans les autres de manière continue ou suivant un angle supérieur à 90°, en particulier supérieur à 125°.

11. Dispositif de suspension selon l'une des revendications précédentes, le piston étant disposé des deux côtés au niveau de deux côtés frontaux du boîtier ; et/ou le piston comprenant, d'un côté ou des deux côtés, une surface d'appui ou de pression pour recevoir et transmettre les forces à transmettre à l'élément élastique à corps solide.

12. Dispositif de suspension selon l'une des revendications précédentes, le piston chevauchant le boîtier à l'état non sollicité au moins sur un côté et dépassant au-delà de ce côté, en particulier par rapport à un côté frontal du boîtier.

13. Dispositif de suspension selon l'une des revendications précédentes, l'élément élastique à corps solide comprenant au moins une extrémité coniquement convexe ; et/ou l'élément élastique à corps solide étant réalisé de manière cylindrique et de manière doublement coniquement convexe sur des côtés opposés.

14. Dispositif de suspension selon l'une des revendications précédentes, le boîtier comprenant un épaulement ou un étage (2.1), en particulier dans une configuration en tant qu'alésage étagé, épaulement ou étage sur lequel l'élément élastique à corps solide s'appuie ou peut être amené en appui.

15. Dispositif de suspension selon l'une des revendications précédentes, le dispositif de suspension (1) étant conçu pour une transmission de volume, en particulier à l'aide d'un/de l'épaulement ou étage (2.1) prévu dans le boîtier (2) et/ou au moyen de plusieurs segments (4a, 4b) de l'élément élastique à corps solide disposés de manières non alignée et agissant les uns sur les autres.

16. Dispositif de suspension servant au montage d'un élément de machine, fabriqué par introduction d'un piston (3) réalisé à partir de métal dans un boîtier (2) et formation d'un espace creux entre eux, dans lequel un élément élastique à corps solide compressible (4) est disposé, toutes les surfaces coniques ou concaves du piston tournées vers l'élément élastique à corps solide (4) étant placées dans l'espace creux de telle sorte qu'en cas de compression, les composantes de force agissant sur celles-ci soient orientées vers l'intérieur de telle sorte qu'une composante de force agissant sur la surface respective en cas de compression provoque un écartement du piston.

17. Dispositif de suspension selon l'une des revendications précédentes, le module d'élasticité du boîtier et/ou du piston étant au moins trois fois plus grand que le module de compressibilité de l'élément élastique à corps solide ; et/ou le boîtier et/ou le piston étant réalisés à partir de métal, en particulier à partir d'acier, d'aluminium ou de métal non ferreux.

18. Dispositif de suspension selon l'une des revendications précédentes, l'élément élastique à corps solide s'appuyant sur la surface en regard du piston et étant en contact avec le piston.

19. Dispositif de fixation (10) servant à la fixation d'un élément de machine, **caractérisé par** un dispositif de suspension (1) selon l'une des revendications précédentes.

20. Utilisation d'un dispositif de suspension selon l'une des revendications précédentes comme élément de précontrainte pour un dispositif de fixation à la manière d'une liaison par vissage, en particulier dans un ensemble formant récipient haute pression comportant une lentille d'étanchéité (20), ou utilisation d'un dispositif de suspension selon l'une des revendications précédentes au niveau d'un bouchon de fermeture de récipient ou à l'emplacement de celui-ci ou au lieu de celui-ci, en particulier en remplacement d'un bouchon de fermeture plein dans un ensemble formant récipient haute pression comportant une lentille d'étanchéité (20).

21. Utilisation d'un dispositif de suspension selon l'une des revendications précédentes dans un système d'étanchéité comportant une lentille d'étanchéité (20).
